Europäisches Patentamt

European Patent Office

Office européen des brevets

(11) Publication number: **0 412 628 A2**

# EUROPEAN PATENT APPLICATION

(21) Application number: 90302974.2

(22) Date of filing: 20.03.90

(51) Int. Cl.⁵: **C09D 11/06**, C09F 9/00

(30) Priority: 04.08.89 JP 203585/89

(43) Date of publication of application:
13.02.91 Bulletin 91/07

(84) Designated Contracting States:
DE DK FR GB IT NL

(71) Applicant: **Nikken Chemical Laboratory Co., Ltd.**
**16-1 Sakae, 2-chome**
**Naka-Ku Nagoya(JP)**

(72) Inventor: **Mio, Katsumi**
**109-2, Fujimiya**
**Akodohshicho, Kohnan-Shi(JP)**

(74) Representative: **Gilding, Martin John et al**
**Eric Potter & Clarkson St. Mary's Court St. Mary's Gate**
**Nottingham NG1 1LE(GB)**

(54) Drier for offset printing ink.

(57) A drier for offset printing ink which contains as a catalyst for the oxidization of the ink a heavy metal salt, such as a cobalt salt or a manganese salt, of a higher hydroxyfatty acid with no double bond in the molecules thereof or with one or two double bonds in each molecule thereof. The drier may further contain a higher alcohol or an aromatic alcohol as a solvent for the heavy metal salt.

EP 0 412 628 A2

## DRIER FOR OFFSET PRINTING INK

### FILED OF THE INVENTION

This invention relates to a drier for offset printing ink and more particularly to a drier therefor which does not adversely affect the properties of the ink suitable for printing.

### BACKGROUND OF THE INVENTION

In offset lithography, printing areas on a printing plate are treated with grease, and the printing plate is coated with water. The water does not stay on the greasy printing areas, but stays on the non-printing parts. Ink is applied on the printing plate. The printing areas hold the ink, but the non-printing parts reject the greasy ink. The ink is first transferred to the blanket cylinder, and is thence transferred to the paper which is pressed against the blanket cylinder by the impression cylinder.

The water applied on the printing plate does not allow the ink to stay on the non-printing parts and, hence, enables a clearly outlined image to be printed on the paper.

A drying oil or a polymerized drying oil is used, as a vehicle, to prepare the ink. The ink solidifies by oxidizing. In other words, the ink solidifies by taking oxygen in the portions of the vehicle where double bonds exist.

A drier is also used to prepare the ink. The drier is used as a catalyst for accelerating the oxidation of the ink. An example of the drier is a cobalt salt or manganese salt of octanoic acid, of naphthenic acid, of resin acid, of the fatty acid of tall oil, of the fatty acid of linseed oil, of the fatty acid of soybean oil.

The conventional drier, however, adversely affects the properties of the ink suitable for printing. The properties of the ink suitable for printing include. its malleability, its adhesive strength not much varied by different printing rates or different surface conditions of papers to be printed, and its tendency not to pollute the portion of the paper which has not been printed.

It has been considered that offset lithography requires that the ink and the water have a moderate affinity for each other. Investigations conducted by the inventor have shown that the reason why the drier adversely affects the properties of the ink suitable for printing is that the drier has only a very poor affinity for the water. Also, there is a tendency for the conventional drier to cause the ink in the ink fountain of the offset press to "skin", or to be covered with a dry film on its surface.

### SUMMARY OF THE INVENTION

It is the object of the invention to provide a novel drier for an offset printing ink which accelerates the solidification of the ink, but does not adversely affects the properties of the ink suitable for printing nor causes the ink to skin.

### DETAILED DESCRIPTION OF PREFERRED EMBODIMENTS

According to the invention, a drier for an offset printing ink is provided which contains, as a catalyst for the oxidation of the ink, a heavy metal salt, such as a cobalt salt or a manganese salt, of a higher hydroxyfatty acid with no double bond in the molecules thereof or with one or two double bonds in each molecule thereof. Preferably the drier further contains a higher alcohol or an aromatic alcohol as a solvent for the heavy metal salt.

If the drier of the invention is added to an offset printing ink, the drier accelerates the drying of the ink without adversely affecting the properties of the ink suitable for printing. It is considered that the reason for this advantage of the drier comes from the fact that the heavy metal salt of the higher hydroxyfatty acid has a good affinity for water, thanks to the presence of - OH groups in the heavy metal salt.

Also, an offset printing ink containing the drier shows little tendency to "skin" in the ink fountain of an offset press. The reason for this advantage of the drier may be explained by the presumption that the - OH groups in the heavy metal salt of the higher hydroxyfatty acid become located in the surface layer of the ink and adsorb moisture from the atmosphere, and the moisture forms a water layer on the surface of the ink. This presumption will be explained later in detail.

Examples of the invention will now be described in detail.

Example 1-a

TABLE 1

| Components | Amounts used |
|---|---|
| Solution of (i) a cobalt salt of a product obtained by saponifying castor oil and (ii) oleyl alcohol [containing 2% Co] | 25 grams |
| Medium for offset printing ink MS-11 [mfd. by Ohsaka Printing Ink Manufacturing Co., Ltd.] | 100 grams |

The two components of Table 1 were mixed and kneaded by using a roll mill with three rolls. As a result, a pasty drier was obtained.

The above cobalt salt was prepared as follows: A solution of 12 grams of cobalt chloride $CoCl_2 \cdot 6H_2O$ and 500 milliliters of water was mixed with a solution of 30 grams of a product obtained by saponifying castor oil, 4 grams of caustic potash (with a purity of 80%) and 1,000 milliliters of water. The two solutions were agitated while mixing them. As a result, a precipitate of a light purple color was obtained. The precipitate was rinsed. Then, heavy metal oxides and heavy metal hydroxides which had resulted from the hydrolysis and fatty acids which had not reacted were removed from the precipitate in a usual manner. Then, the precipitate was allowed to dry. As a result, 32 grams of a resin-like cobalt salt was obtained. The cobalt salt was one containing 8.8% Co.

There was a tendency for the cobalt salt not to dissolve in animal oil, vegetable oil or mineral oil. However, the cobalt salt showed a tendency to dissolve readily in higher alcohols or aromatic alcohols.

Ricinolic acid, which was the major component of the product obtained by saponifying castor oil, has 18 carbons, and has one - OH group and two double bonds in each molecule thereof.

Example 1-b

TABLE 2

| Components | Amounts used |
|---|---|
| Solution of (i) a cobalt salt of a product obtained by saponifying castor oil and (ii) oleyl alcohol [containing 2% Co] | 12.5 grams |
| Solution of (i) a manganese salt of a product obtained by saponifying castor oil and (ii) oleyl alcohol [containing 2% Mn] | 12.5 grams |
| Medium for offset printing ink MS-11 [mfd. by Ohsaka Printing Ink Manufacturing Co., Ltd.] | 100.0 grams |

The three components of Table 2 were mixed and kneaded by using a roll mill with three rolls. As a result, a pasty drier was obtained.

The cobalt salt of Table 2 was prepared by using the same components and technique as the cobalt salt of Table 1. The above manganese salt was prepared by using the same components and technique as the above cobalt salt except that $MnCl_2 \cdot 6H_2O$ were used instead of $CoCl_2 \cdot 6H_2O$

Example 2-a

TABLE 3

| Components | Amounts used |
|---|---|
| Solution of (i) a cobalt salt of hydroxytridecylic acid and (ii) tridecyl alcohol [containing 2% Co] | 25 grams |
| Medium for offset printing ink MS-11 [mfd. by Ohsaka Printing Ink Manufacturing Co., Ltd.] | 100 grams |

The two components of Table 2 were mixed and kneaded by using a roll mill with three rolls. As a result, a pasty drier was obtained.

The cobalt salt of Table 2 was prepared as follows: A solution of 12 grams of cobalt chloride $COCl_2 \cdot H_2O$ and 500 milliliters of water was mixed with a solution of hydroxytridecylic acid ($HO-C_{12}H_{24}-COOH$), 4 grams of caustic potash (with a purity of 80%) and 1,000 milliliters of water. The solutions were agitated while mixing them. As a result, a precipitate of a light purple color was obtained. The precipitate was rinsed, and refined in a usual manner. Then, the precipitate was allowed to dry. As a result, approximately 27 grams of resin-like cobalt salt was obtained. The cobalt salt was one containing 11.1% Co.

Hydroxytridecylic acid has 13 carbons, and has one OH group in each molecule thereof, but has no double bond in the molecules thereof.

Example 2-b

TABLE 4

| Components | Amounts used |
|---|---|
| Solution of (i) a cobalt salt of hydroxytridecylic acid and (ii) tridecyl alcohol [containing 2% Co] | 12.5 grams |
| Solution of (i) a manganese salt of hydroxytridecylic acid and (ii) tridecyl alcohol [containing 2% Mn] | 12.5 grams |
| Medium for offset printing ink MS-11 [mfd. by Ohsaka Printing Ink Manufacturing Co., Ltd.] | 100.0 grams |

The three components of Table 4 were mixed and kneaded by using a roll mill with three rolls. As a result, a pasty drier was obtained.

The cobalt salt of Table 4 was prepared by using the same components and technique as the cobalt salt of Table 3. The manganese salt of Table 4 was prepared by using the same components and technique as the cobalt salt except that $MnCl_2 \cdot 6H_2O$ was employed instead of $CoCl_2 \cdot 6H_2O$.

Example 3-a

4

TABLE 5

| Components | Amounts used |
|---|---|
| Solution of (i) a cobalt salt of a material produced by adding hydrogen to a product obtained by saponifying castor oil and (ii) benzyl alcohol [containing 2% Co] | 25 grams |
| Linseed oil | 100 grams |

The two components of Table 5 were mixed to prepare a liquid drier.

The cobalt salt of Table 5 was prepared as follows: A solution of 12 grams of $CoCl_2 \cdot 6H_2O$ and 500 milliliters of water was mixed with a solution of 30 grams of a material produced by adding hydrogen to a product obtained by saponifying castor oil, 4 grams of caustic potash (with a purity of 80%) and 1,000 milliliters of water. The solutions were agitated while mixing them. As a result, a precipitate of a light purple color was obtained. The precipitate was rinsed, and refined in a usual manner. Then, the precipitate was allowed to dry. As a result, approximately 32 grams of cobalt salt was obtained. The cobalt salt was one containing 8.8% Co.

One of the components of the solution of Table 4, namely, the material produced by adding hydrogen to a product obtained by saponifying castor oil had one OH group in each molecule thereof, but had no double bond in the molecules thereof.

Example 3-b

TABLE 6

| Components | Amounts used |
|---|---|
| Solution of (i) a cobalt salt of a material produced by adding hydrogen to a product obtained by saponifying castor oil and (ii) benzyl alcohol [containing 2% Co] | 12.5 grams |
| Solution of (i) a manganese salt of a material produced by adding hydrogen to a product obtained by saponifying castor oil and (ii) benzyl alcohol [containing 2% Mn] | 12.5 grams |
| Linseed oil | 100.0 grams |

The three components of Table 6 were mixed to prepare a liquid drier.

The driers of Examples 1-a to 3-b were compared with commercially available driers for offset printing ink as shown in Table 7. To test each drier, each drier was added by 2 per cent to the ink "MS-GP193 Black" manufactured by Ohsaka Printing Ink Manufacturing Co., Ltd, and the inks were used to offset print papers. The time taken for each ink to dry after the ink had been transferred to the paper was determined. The results were as shown in Table 7:

TABLE 7

| Inks | Drying Time | Setting Time |
|---|---|---|
| Not containing a drier | 3 hrs | 7.5 min. |
| Containing a commercially available drier | 1 hr and 50 min. | 7.5 min. |
| Containing the drier of Example 1-a | 1 hr and 50 min. | 4.5 min. |
| Containing the drier of Example 1-b | 2 hrs and 20 min. | 4.5 min. |
| Containing the drier of Example 2-a | 1 hrs and 50 min. | 4.5 min. |
| Containing the drier of Example 2-b | 2 hrs and 20 min. | 4.5 min. |
| Containing the drier of Example 3-a | 1 hr and 50 min. | 4.5 min. |
| Containing the drier of Example 3-b | 2 hrs and 20 min. | 4.5 min. |

In Table 7 the "drying time" is used to mean the time taken for the ink on the paper to solidify completely. Also, in Table 7 the "setting time" is used to mean the time taken for the ink on the paper to dry sufficiently not to adhere on other material when the paper printed was placed on the other material. A reduction of the "setting time" has been desired much more than that of the "drying time".

As shown in Table 7, the ink containing the commercially available drier showed a setting time of 7.5 minutes. The ink not containing a drier showed the same setting time. However, any one of the inks containing the driers of the invention showed a setting time of 4.5 minutes. It is a considerable reduction of the setting time. Also, as shown in Table 7, the use of the driers of the invention resulted in considerable reductions of the drying time when compared with no use of a drier. However, the use of the driers of the invention did not result in a reduction of the drying time when compared with the use of the commercially available drier. It is considered that the characteristic of the drier of the invention that the drier reduces the setting time much more materially than the drying time result from the following behaviour of the - OH groups of the heavy metal salt of the higher hydroxyfatty acid contained in the drier: The heavy metal salt of the higher hydroxyfatty acid has an inherent affinity for oil and, hence, for the oil-based offset printing ink. But the - OH groups of the heavy metal salt do not have affinities for oil (they have affinities for water). Therefore, when the drier has been added to the ink, the - OH groups therein exhibit an aversion to the ink and rise to the surface of the ink. It is well known that a surface active agent behaves similarly. It may be assumed that the hydroxyl groups thus located on the surface of the ink adsorb moisture from the atmosphere, and hence the moisture forms a very thin layer of water on the surface of the ink so that the moisture prevents the ink not yet dried from adhering to other material.

Ink manufacturers may produce inks having the optimum properties for offset printing. However, a drier is usually added to the ink before the ink is actually used. As described before, a conventional drier for offset printing ink has only a very poor affinity for water and, hence, adversely affects the moderate affinity between the ink and the water with the result that the properties of the ink suitable or optimum for printing are adversely affected. However, the drier of the invention does not adversely affect the properties of the ink suitable for printing since the drier of the invention has a good affinity for water thanks to the - OH groups of the heavy metal salt of the higher hydroxyfatty acid thereof.

Also, an ink containing the drier of the invention shows little tendency to "skin", as compared with an ink containing a conventional drier, when the ink is in the ink fountain of an offset press and is exposed to the atmosphere. It is assumed that the reason for this advantage is that the the moisture adsorbed from the atmosphere onto the surface of the ink by the -OH groups prevent the atmosphere from coming into contact with the ink proper.

In each of the foregoing Examples, the heavy metal salt of the higher hydroxyfatty acid was prepared by saponifying the higher hydroxyfatty acid in a solution of alkali and water and making a solution of chlorinated heavy metal and water. Another method for preparing the heavy metal salt of the higher hydroxyfatty acid is to add a heavy metal oxide to the higher hydroxyfatty acid in the amount equivalent to or slightly greater than the amount of the acid and heating the whole for 3 to 8 hours at a temperature of 120 to 150 °C while agitating the whole.

Experiments conducted by the inventor have shown that a higher hydroxyfatty acid with 10 to 20 carbons and with one or two double bonds or no double bond in each molecule is suitable for the invention. Also, experiments conducted by the inventor have shown that the effect of the drier of the invention does not largely depend upon the particular position (i.e., primary, secondary or tertiary of the - OH group.

6

**Claims**

1. A drier for offset printing ink which contains as a catalyst for the oxidization of the ink a heavy metal salt, such as a cobalt salt or a manganese salt, of a higher hydroxyfatty acid having no double bond in the molecules thereof.

2. A drier for offset printing ink which contains as a catalyst for the oxidization of the ink a heavy metal salt, such as a cobalt salt or a manganese salt, of a higher hydroxyfatty acid having less than three double bonds in each molecule thereof.

3. A drier in accordance with claim 1 which further contains a higher alcohol as a solvent for said heavy metal salt.

4. A drier in accordance with claim 2 which further contains a higher alcohol as a solvent for said heavy metal salt.

5. A drier in accordance with claim 1 which further contains an aromatic alcohol as a solvent for said heavy metal salt.

6. A drier in accordance with claim 2 which further contains an aromatic alcohol as a solvent for said heavy metal salt.